# EUROPEAN PATENT APPLICATION

(11) **EP 4 047 429 A1**
(43) Date of publication of application: **24.08.2022**
(21) Application number: 20877096.6
(22) Date of filing: 16.10.2020
(51) Int. Cl.: G05B 19/418, B23Q 41/08

(54) **MACHINE TOOL AND PRODUCTION SYSTEM**

(30) Priority: 18.10.2019 JP 2019191102
(71) Applicant: Makino Milling Machine Co., Ltd., Tokyo 152-8578 (JP)
(72) Inventor: SATO, Motohiko, Aiko-gun, Kanagawa 243-0303 (JP)
(74) Representative: McWilliams, David John
(86) International application number: PCT/JP2020/039176
(87) International publication number: WO 2021/075573

(57) **Abstract**

This machine tool is provided with: a sensor (30-1, 30-2, 30-3, 30-4) which is disposed in the vicinity of an opening for loading a workpiece and which measures the motion of an object approaching the opening; a storage unit (18) storing a rule for classifying non-processing time into setup time and non-setup time on the basis of the motion of the object relative to the sensor; a determination unit (14) which, when a processing program is not being executed, determines whether the current state of the machine tool corresponds to setup time or non-setup time on the basis of the motion of the object and the rule stored in the storage unit; and an output unit (20) which produces an output indicating whether the current state of the machine tool corresponds to setup time or non-setup time.

## Description

### FIELD

The present invention relates to a machine tool and production system with which the breakdown of non-machining time, which is a time during which a machine tool is not performing machining, can be understood.

### BACKGROUND

Accurate management of the time required for each process of a machine tool is necessary to improve the accuracy of scheduling and the accuracy of estimation of manufacturing costs, and for the improvement of productivity. Patent Literature 1 describes an operation record display and analysis system which displays and analyzes operation results of a plurality of installations.

### [CITATION LIST]

### [PATENT LITERATURE]

[PTL 1] Japanese Unexamined Patent Publication (Kokai) No. 7-251356

### SUMMARY

### [TECHNICAL PROBLEM]

Non-machining time, during which a machine tool is not performing machining, includes not only wasted (idle) time when the machine tool is simply stopped, but includes setup time during which the operator performs tasks such as workpiece introduction, positioning and affixation of a workpiece on the machine tool, removal and discharge of a workpiece from the machine tool, as well as tool introduction and removal.

In connection thereto, in the prior art including the operation record display and analysis system described in Patent Literature 1, there is a problem in that the breakdown of non-machining time including setup time and wasted time cannot be clearly understood.

The present invention aims to solve such problem of the prior art, and an objective thereof is to provide a machine tool and production system with which the breakdown of non-machining time, during which the machine tool is not performing machining, into setup time and wasted time can clearly be understood.

### [SOLUTION TO PROBLEM]

In order to achieve the above object, according to the present invention, there is provided a machine tool for machining a workpiece based on a machining program, the machine tool comprising a sensor which is arranged in a vicinity of an aperture for introduction of a workpiece and which measures a target movement near the aperture, a storage unit in which there are stored rules for dividing a non-machining time into a setup time and a non-setup time based on the target movement measured by the sensor, a determination unit which determines, when the machining program is not being executed, whether a current state of the machine tool is a setup time or a non-setup time based on the target movement and the rules stored in the storage unit, and an output unit which outputs whether the current state of the machine tool is a setup time or a non-setup time.

According to the present invention, there is further provided a production system for producing a product with a plurality of machine tools which machine a workpiece based on a machining program, the production system comprising a plurality of machine tools in which a sensor is arranged in a vicinity of an aperture for introduction of a workpiece and measures a target movement near the aperture, a process management device for managing processes of each of the machine tools, the process management device comprising a storage unit in which there are stored rules for dividing a non-machining time into a setup time and a non-setup time based on the target movement measured by the sensor, a determination unit which determines, when the machining program is not being executed, whether a state of the machine tool is a setup time or a non-setup time based on the target movement and the rules stored in the storage unit, and an output unit which outputs whether the state of the machine tool is a setup time or a non-setup time, and a display which displays the setup time along a time axis based on the state of the machine tool transmitted from the transmission unit.

### [ADVANTAGEOUS EFFECTS OF INVENTION]

According to the present invention, the breakdown of non-machining time, including the setup time and wasted time of the machine tool or each machine tool constituting the production system, is clarified, whereby production scheduling and production costs can accurately be estimated, and productivity can be increased.

### BRIEF DESCRIPTION OF DRAWINGS

FIG. 1 is a plan view of a machine tool according to a first embodiment, and shows a state in which first and second doors, which close first and second apertures in FIG. 1 in an openable and closable manner, are closed.
FIG. 2 is a plan view of the machine tool according to the first embodiment, showing a state in which the first and second doors are open.
FIG. 3 is a plan view of a machine tool according to a second embodiment, showing a state in which first and second doors are closed.
FIG. 4 is a plan view of the machine tool according to the second embodiment, showing a state in which the first and second doors are open.
FIG. 5 is a schematic view showing an example of a production system.
FIG. 6 is a block diagram of a process management device.
FIG. 7 is a flowchart detailing a method for extracting a setup dime from a non-machining time.
FIG. 8 is a chart showing machine tool operation performance.
FIG. 9 is a flowchart detailing a method for determining whether a setup time is a time for workpiece discharge, a time for workpiece position adjustment, or a time for workpiece introduction.

### DESCRIPTION OF EMBODIMENTS

Preferred embodiments of the present invention will be described below with reference to the attached drawings.

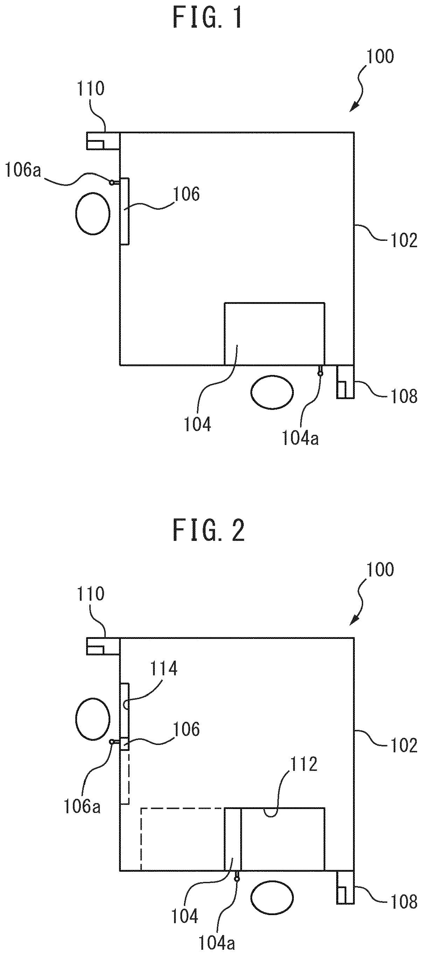

FIG. 1 shows an example of a machine tool to which the present invention is applied. In FIG. 1, the machine tool 100 comprises a cover 102 which encloses a processing machine, such as an electric discharge processing machine (not illustrated) or a machining center (not illustrated), which machines a workpiece in accordance with a machining program, and the peripheral equipment for the processing machine. The peripheral equipment includes an electrode magazine (not illustrated) or tool magazine (not illustrated), an automatic electrode exchange device (not illustrated) or automatic tool exchange device (not illustrated), and a machining fluid supply device for an electric discharge machine or a cutting fluid supply device for a machining center.

The machine tool 100 has a table (not illustrated) for affixation of the workpiece, a spindle (not illustrated) on which an electrode or rotary tool is mounted, feed shaft devices (not illustrated) which feed the table and the spindle relative to each other in at least three orthogonal axial directions, an NC device (not illustrated) for controlling the feed shaft devices in accordance with the machining program, and a machine controller (not illustrated) which controls the functions of the processing machine, excluding the feed shaft devices, and the peripheral equipment.

The cover 102 has first and second apertures 112, 114. The first aperture 112 is formed in a front surface side of the cover 102 from a side wall to an upper wall. The first aperture 112 leads to a machining area, and due to the first aperture 112, the operator can access the machining area of the processing machine in the cover 102. The machining area is a space in which the workpiece is arranged on and affixed to the table of the processing machine and is machined with an electrode such as a pore electrode or a formed electrode (not illustrated) for use as a tool or a rotary tool such as an end mill (not illustrated).

The second aperture is formed in a side wall separate from the side wall of the front surface side of the cover 102 in which the first aperture 112 is formed, and in the embodiment shown in FIGS. 1 and 2, the side wall on the left side as viewed from the front side, which is connected perpendicular to the side wall of the front surface side. The second aperture 114 leads to a space in the cover 102 where the peripheral equipment, such as an electrode magazine (not illustrated) or a tool magazine (not illustrated), is arranged, and due to the second aperture 114, the operator can access this equipment.

A large number of electrodes mounted in electrode holders (not illustrated) are stored in the electrode magazine, and these can be exchanged with a used electrode mounted on the tip of the spindle of an electric discharge processing machine by an automatic electrode exchange device. A large number of tools mounted in tool holders are stored in the tool magazine. In accordance with the machining program, the tool to be used in a subsequent process is selected, and the tool mounted on the rotary spindle of a machining center is replaced therewith by an automatic tool exchange device.

The cover 102 further has first and second doors 104, 106 which open and close the first and second apertures 112, 114. The first door 104 is attached to the cover 102 so as to be horizontally slidable along the side wall and upper wall of the front surface side of the cover 102 in which the first aperture 112 is formed. The second door 106 is attached to the cover 102 so as to be horizontally slidable along the side wall in which the second aperture 114 is formed. The first and second doors 104, 106 may be configured so as to be slidable in the upward-downward directions instead of in the horizontal direction. Furthermore, though the first and second doors 104, 106 are typically plate-like doors, they may be shutter-like doors.

The first and second doors 104, 106 may be rotating doors which are rotatably attached to the side wall of the cover 102 by hinges. However, when the first and second doors 104, 106 are rotating doors, it is necessary that the rotating doors be able to overlap on the side wall when opened so as not to interfere with the radio waves emitted by a radar-type distance sensor, which will be described later.

As shown in FIG. 2, the operator grasps a door handle 104a standing in front of the first door 104, opens the first door 104 by sliding the first door 104 to the left (the left in FIG. 2), and can access the machining area through the first aperture 112. In this manner, the operator can perform setup operations such as removing and discharging a machined workpiece (not illustrated) from the table, and introducing an unmachined workpiece (not illustrated) and positioning and affixing it to the table.

Likewise, the operator grasps the door handle 106a standing on the front surface of the second door 106, opens the second door 106 by sliding the second door 106 to the right (downward in FIG. 2), and can access the peripheral equipment such as the electrode magazine or tool magazine through the second aperture 114. In this manner, the operator can perform setup operations such as removing a used electrode (not illustrated) from the electrode magazine, mounting an unused electrode (not illustrated) in a predetermined position of the electrode magazine, removing a damaged or worn tool (not illustrated) from the tool magazine and attaching a new tool to the tool magazine, or attaching and preparing the tool to be used in the tool magazine.

First and second distance sensors 108, 110 are arranged on the cover 102 as sensor for measuring the target movement near the apertures. The first and second distance sensors 108, 110 are preferably attached to the cover 102 on the side walls on which the first and second doors 104, 106 are arranged, as shown in FIGS. 1 and 2. The first distance sensor 108 is a distance sensor for measuring the distance between an object in front of the side wall on which the first door 104 is arranged and the first distance sensor 108, and is preferably a high-precision radar used in non-contact vital sensors. The second distance sensor 110 is a distance sensor for measuring the distance between an object in front of the side wall on which the second door 106 is arranged and the second distance sensor 110, and is preferably a high-precision radar used in non-contact vital sensors.

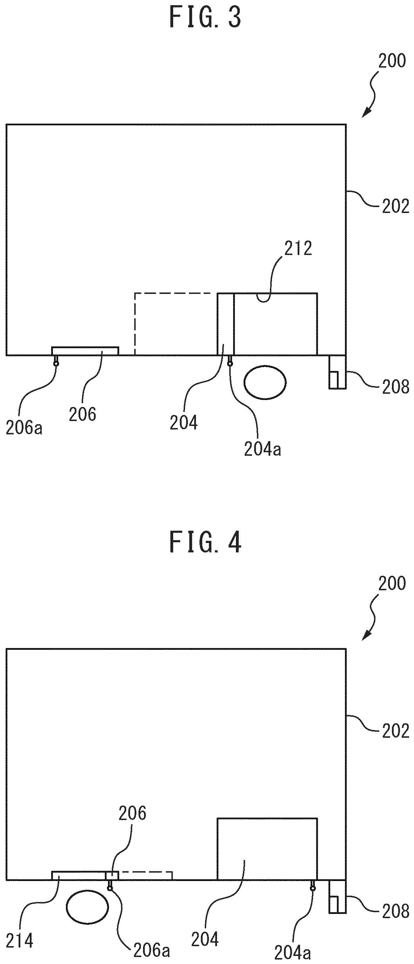

Though the first and second doors 104, 106 are attached to different side walls in the embodiment shown in FIGS. 1 and 2, they may be attached to the same side wall, as shown in FIGS. 3 and 4. In FIGS. 3 and 4, a cover 202 of a machine tool 200 has first and second apertures 212, 214. The first and second apertures 212, 214 are formed from the same side wall on the front side of the cover 202 to the upper wall. The first aperture 212 leads to a machining area, and the second aperture 214 leads to a space where the peripheral equipment is arranged. By opening the first and second doors 204, 206, the operator can access the machining area and the space where the peripherals are arranged. The first and second doors 204, 206 can also be plate-shaped or shutter-shaped sliding doors or rotating doors in the same manner as the first and second doors 104, 106 of FIGS. 1 and 2.

In the present embodiment, one distance sensor 208 is attached to the cover 102 on the side wall on which the first and second doors 204, 206 are arranged as a sensor for measuring the target movement near the aperture. The distance sensor 208 is identical to the first and second distance sensors 108, 110 of the embodiment of FIGS. 1 and 2.

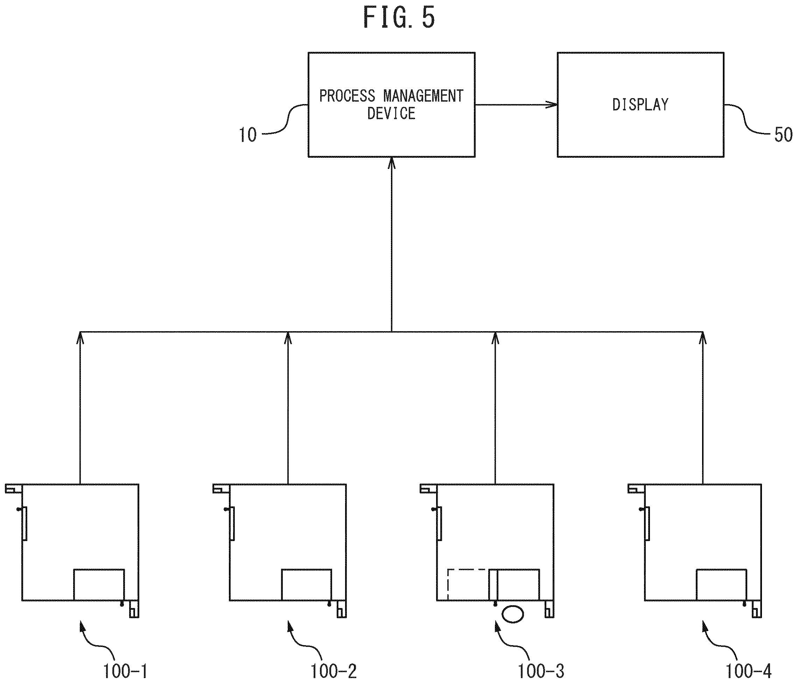

In the present embodiment, the plurality of machine tools can be connected to a process management device 10 to constitute a production system. Referring to FIG. 5, four machine tools 100-1, 100-2, 100-3, 100-4 are connected to one process management device 10. Furthermore, the processing results by the process management device 10 are displayed on a display (display device) 50. Rather than a single display device, the display 50 may be a plurality of display devices installed in a number of locations in a factory. The display device can be a liquid crystal display of a personal computer or a tablet.

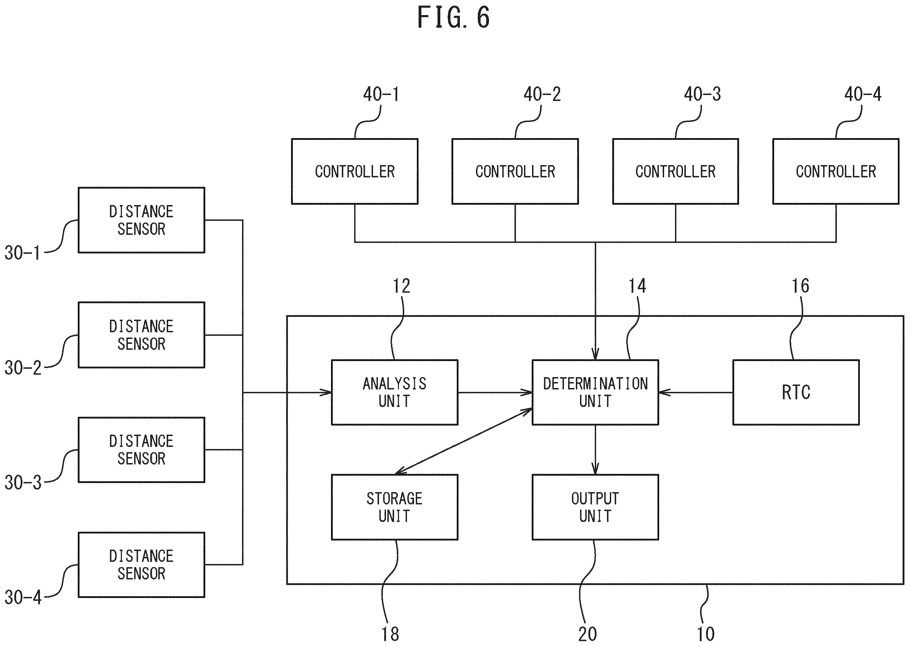

Referring to FIG. 6, the process management device 10 comprises, as primary constituent elements, an input unit 12, a determination unit 14, an RTC 16 composed of an integrated circuit having a clock function, a storage unit 18, and an output unit 20. The process management device 10 can be constituted from a computer having a CPU (central processing unit), a memory device such as RAM (random access memory) or ROM (read-only memory), a storage device such as an HDD (hard disk drive) or SSD (solid-state drive), input/output ports, and bidirectional busses connecting these components to each other, as well as associated software.

Though the plurality of machine tools 100-1, 100-2, 100-3, 100-4 are connected, in FIG. 5, to one process management device 10, which collectively constitute a production system, one machine tool may be connected to one process management device 10 to constitute one machine tool. In this case, the process management device 10 may be combined as a part of a machine controller of the machine tool.

Respective distance sensors 30-1, 30-2, 30-3, 30-4 of the machine tools 100-1, 100-2, 100-3, 100-4 are connected to the input unit 12. The distance sensors 30-1, 30-2, 30-3, 30-4 are the first and second distance sensors 108, 110 in the case of the embodiment of FIGS. 1 and 2, and are the distance sensor 208 in the case of the embodiment of FIGS. 3 and 4.

The input unit 12 receives signals from the distance sensors 30-1, 30-2, 30-3, 30-4, associates the signals with the distance sensor from which it was received, and outputs the signals to the determination unit 14. The signals from the distance sensors 30-1, 30-2, 30-3, 30-4 are signals representing distance. When the output signals from the distance sensors 30-1, 30-2, 30-3, 30-4 are digital signals, they are signals representing the detected distance itself. When the output signals from the distance sensors 30-1, 30-2, 30-3, 30-4 are analog signals, they are signals having an amplitude or intensity proportional to the detected distance.

The determination unit 14 is connected to respective controllers 40-1, 40-2, 40-3, 40-4 of the machine tools 100-1, 100-2, 100-3, 100-4 via a communication installation such as a LAN installed in a factory. The controllers 40-1, 40-2, 40-3, 40-4 include NC devices and machine controllers of the machine tools 100-1, 100-2, 100-3, 100-4, respectively. The determination unit 14 receives the machining program read and interpreted by the controllers 40-1, 40-2, 40-3, 40-4 from each of the controllers 40-1, 40-2, 40-3, 40-4. At the same time, the determination unit 14 receives the current time from the RTC 18.

The storage unit 18 stores rules or determination criteria for dividing a non-machining time, which is a time during which each of the machine tools 100-1, 100-2, 100-3, 100-4 is not machining, into a setup time when the operator performs setup operations, and a wasted time (idle time) other than the setup time, based on distance fluctuations notified by the distance sensors 30-1, 30-2, 30-3, 30-4. Furthermore, the determination results by the determination unit 14 may be stored in the storage unit 18.

The output unit 20 can be a VGA (D-Sub15-pin) terminal (analog output terminal), DVI terminal, HDMI^{™} terminal, or display port (DisplayPort) terminal (digital output terminal) for outputting the processing results or determination results by the determination unit 14 to display 50, or can be a wired or wireless LAN port for connecting to a personal computer other than the process management device 10 or a portable electronic device such as a tablet.

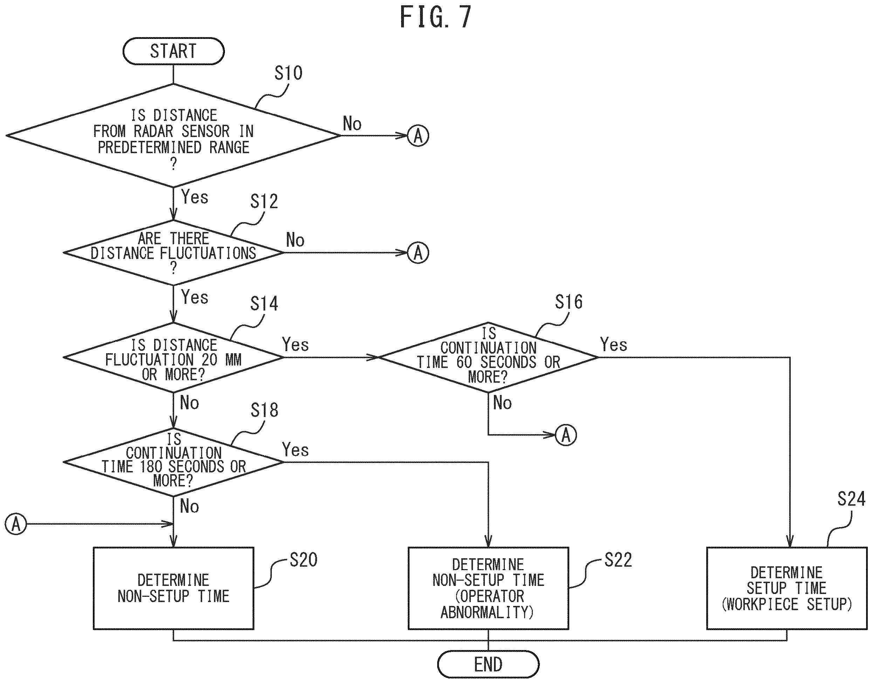

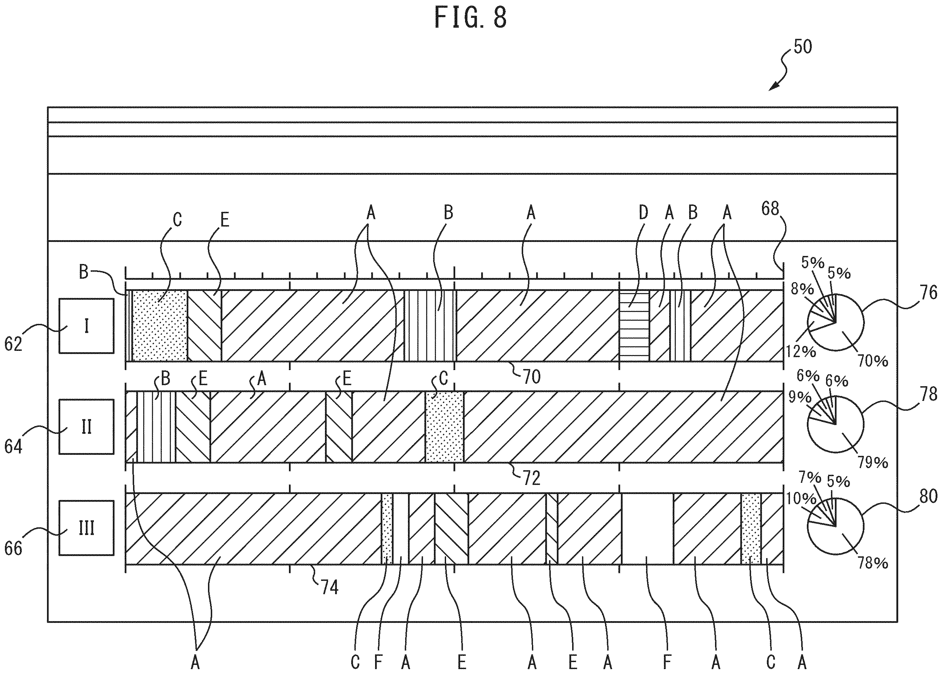

The mode of operation of the above embodiment will be described below with reference to FIGS. 7 and 8.

While the machine tools 100-1, 100-2, 100-3, 100-4 are running, i.e., while the power is on, the determination unit 14 receives the machining programs from the controllers 40-1, 40-2, 40-3, 40-4 and the current time from the RTC16, and based on the machining programs and the current time, the time when the machine tools 100-1, 100-2, 100-3, 100-4 are not performing machining is output to the storage unit 18 as a non-machining time. The determination unit 14 determines whether or not the distances detected by the distance sensors 30-1, 30-2, 30-3, 30-4 are within a predetermined range at least during the non-machining time (step S10).

When some sort of object is present in front of the side wall on which the first and second doors 104, 106 (the first and second apertures 112, 114) are arranged in the embodiment of FIGS. 1 and 2, the distances detected by the distance sensors 30-1, 30-2, 30-3, 30-4 are the distance between the object and the distance sensors 108, 110, and when some sort of object is present in front of the side wall on which the first and second doors 204, 206 (the first and second apertures 212, 214) are arranged in the embodiment of FIGS. 3 and 4, the distances detected by the distance sensors 30-1, 30-2, 30-3, 30-4 are the distance between the object and the distance sensor 208.

The predetermined range is determined in consideration of the distance between the first and second distance sensors 108, 110 constituting the distance sensors 30-1, 30-2, 30-3, 30-4 and the first and second doors 104, 106 (the embodiment of FIGS. 1 and 2) and the distance between the distance sensor 208 and the first and second doors 204, 206 (the embodiment of FIGS. 3 and 4). As an example, in the embodiment of FIGS. 1 and 2, the predetermined range can be 600 to 1200 mm, and in the embodiment of FIGS. 3 and 4, it can be 1800 to 2400 mm. In the space in front of the side wall where the first and second doors 104, 106 (FIGS. 1, 2); 204, 206 (FIGS. 3, 4) are arranged, the above predetermined range measured from the first and second distance sensors 108, 110 and the distance sensor 208 parallel to the side wall is set as a region of interest.

When the distance detected by the distance sensors 30-1, 30-2, 30-3, 30-4 is not within the predetermined range (No in step S 10), it can be determined that an object is not present in front of the first and second doors 104, 106 or the first and second doors 204, 206, and thus, since at least the operator has not performed the setup operations, the process proceeds to step S20 and the non-setup time is determined. When the distance detected in step S10 is within a predetermined range (Yes in step S10), the process proceeds to step S12, and it is determined whether or not fluctuation of the distance is detected.

If the distance detected by the distance sensors 30-1, 30-2, 30-3, 30-4 does not fluctuate (No in step S12), since the object present in the region of interest in front of the first and second doors 104, 106 (FIGS. 1 and 2); 204, 206 (FIGS. 3 and 4) is not moving, i.e., is inanimate, and is not the operator, the process proceeds to step S20, and it is determined that it is a non-setup time (step S20).

When the distance detected in step S12 is fluctuating, the process proceeds to step S14, and it is determined whether or not the magnitude of the fluctuation is equal to or greater than a predetermined value. Generally, humans cannot be completely stationary, even if they seem to be stationary and still at first glance, the body is actually swaying due to, for example, pulsations and other effects. Thus, in step S14, among the detected fluctuating distances, fluctuations of the distance less than the predetermined value are considered to be due to fluctuations of the human body, and by removing them, it can be determined whether or not a person (the operator) is working. The predetermined value can be, for example, 20 mm.

In the case of Yes in step S 14, in step S 16, it is determined whether or not such fluctuations in distance continue for a predetermined time (first predetermined time) or longer. This is to eliminate, for example, the case where the operator passes through the region of interest by walking. This predetermined time can be, for example, 60 seconds. In the case of No in step S16, the operator has not performed the setup operation, so the process proceeds to step S20 and it is determined that it is a non-setup time. In the case of Yes in step S16, it is determined that the person is continuously moving in the region of interest, i.e., performing a setup operation (step S24).

In the case of No in step S14, since the distance between the object in the region of interest and 30-1, 30-2, 30-3, 30-4 fluctuates, as described above, it is determined that the object is a human (operator), not simply an object, but the distance variation is small, and the operator in the region of interest is virtually stationary, and thus, it is determined that it is essentially a non-setup time, rather than some operation being performed. When the distance fluctuation smaller than the predetermined value continues for a predetermined time (second predetermined time) or longer (Yes in step S18), and specifically, it is determined that the operator in the region of interest is staying still, which is assumed to be, for example, when the operator collapses and has fainted, it is determined that there is an operator abnormality (step S22). In this case, the corresponding controllers 40-1, 40-2, 40-3, 40-4 can be instructed to issue an alert. In the case of No in step S18, it is determined that it is a non-setup time, i.e., wasted (idle) time (step S20).

According to the present embodiment as described above, the time when the operator is performing setup operations (setup time) can be extracted from the non-machining time when the machine tool is not performing machining. Based thereon, for example, a graph as shown in FIG. 8 can be displayed on the display 50. The graph shown in FIG. 8 includes icons 62, 64, 66 representing each machine tool and bar graphs 70, 72, 74 drawn along the time axis 68. The bar graphs 70, 72, 74 can be displayed by the type of machine tool state such as machining time A, wasted (idle) time B, setup time C, downtime D, maintenance time E, and hold time F. The time axis 68 can be set so that the operator of the process management device 10 inputs and specifies the start date and time and the end date and time of the bar graphs 70, 72, and 74 to be displayed.

The machining time A is the time during which an associated machine tool performs machining, and can be obtained by the process management device 10 communicating with the controller of each machine tool, and in particular, the machine controller. More specifically, the machining time A can be calculated based on information from the RTC 16 along with the reading of codes (for example, G codes) associated with the starting and ending of machining, such as, for example, a spindle rotation start code and end code, described in the machining program read and interpreted by, for example, the NC device of each machine tool.

The wasted time B is the time during which the related machine tool is not performing machining excluding the setup time C, the downtime D, the maintenance time E, the hold time F, etc. The setup time C is the time calculated by the process management device 10 according to the flowchart shown in FIG. 7. The downtime D is the time when the power of the related machine tool is turned off, and is the time during which the process management device 10 is unable to communicate with the controllers 40-1, 40-2, 40-3, 40-4 of the respective machine tools, excluding the maintenance time E and the hold time F.

The maintenance time E is the time during which the machine tool is maintained or repaired. The maintenance time E can be obtained, for example, during maintenance or repair of the machine tool, by the operator inputting the "maintenance start operation" and "maintenance end operation" from an operation panel (not illustrated) of the respective machine tool, whereby the maintenance start time and date and the maintenance end time and date are input to the controller (machine controller), which is read by the process management device 10.

The hold time F is the time during which the running machining program is temporarily stopped by the operator pressing the hold button of the machine tool. While the machining program is paused, the operator runs the machining program line by line to verify the machining program and observe the inside of the machining chamber to check the machining status. After confirmation by the operator, the temporary stop is released, and machining is restarted.

In the embodiment described above, the setup time C, which is the time when the machine tool is not performing machining since the operator performs the setup operation, is extracted. However, according to the present invention, the setup time C can be further divided into, for example, a workpiece introduction time, a workpiece discharge time, and a workpiece position adjustment time.

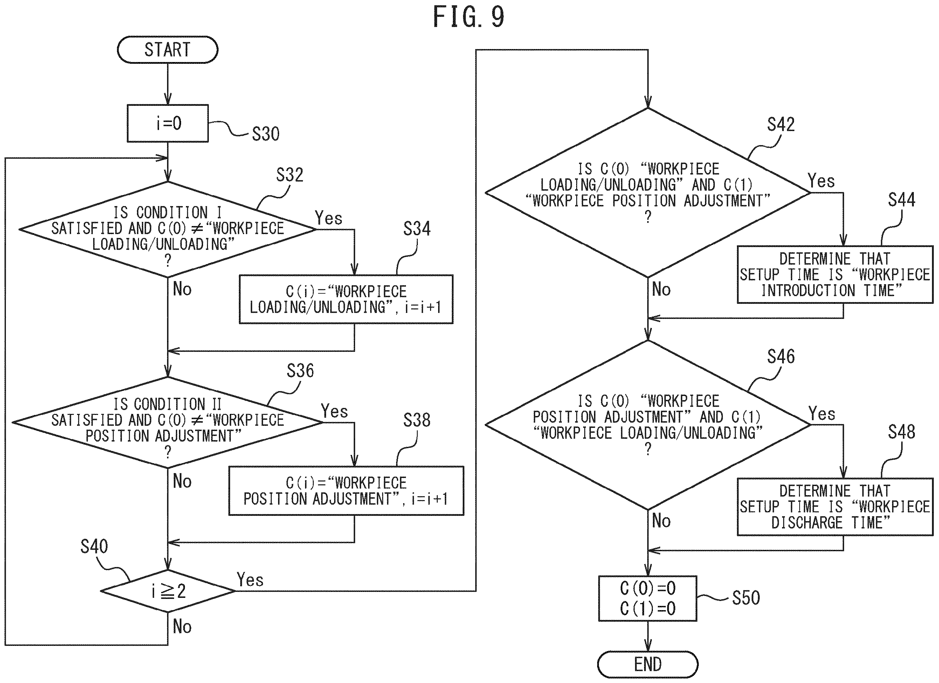

The subroutine of FIG. 9 can be executed in parallel with the subroutine of FIG. 7.

When the subroutine of FIG. 9 is started, 0 (zero) is first input to flag i (step S30). Next, in step S32, it is determined whether or not the following first condition I is satisfied and "workpiece loading/unloading" has not been input to variable C(0). The first condition I is that an object within the predetermined range described above has been detected and a state in which the fluctuation in the distance to the detected object is 150 mm or less is maintained for 1 minute. As described above, the predetermined range can be 600 to 1200 mm in the embodiment of FIGS. 1 and 2, and 1800 to 2400 mm in the embodiment of FIGS. 3 and 4. The first condition I is a condition for extracting the case in which the movement of the operator in the region of interest is relatively small and the operator is discharging or introducing a workpiece.

In the case of Yes in step S32, and specifically, in the case in which the first condition I is satisfied and "workpiece loading/unloading" has not been input to variable C(0), in step S34, "workpiece loading/unloading" is input to variable C(i), 1 is added to the flag i, and the flow proceeds to step S36. In the case of No in step S32, and specifically, in the case in which the first condition I is not satisfied (the movement of the operator is relatively large) or when "workpiece loading/unloading" has already been input to the variable C(0), the flow proceeds to step S36.

In step S36, it is determined whether or not the following second condition II is satisfied and "workpiece position adjustment" has not been input to variable C(0). The second condition II is that an object has been detected in the predetermined range and the distance fluctuation exceeds 150 mm three times in one minute. The second condition II is a condition for extracting the case in which the movement of the operator in the region of interest is relatively small and frequent, and the operator is adjusting the position of the workpiece.

Furthermore, when the flowchart proceeds to step S36, (1) nothing is input to variable C(0) (i.e., C(0) = 0), (2) "workpiece loading/unloading" is input thereto, or (3) "workpiece position adjustment" is input thereto. At this time, (1) nothing is input to variable C(1) (i.e., C(1) = 0), (2) "workpiece loading/unloading" is input thereto, or (3) "workpiece position adjustment" is input thereto.

In the case of Yes in step S36, and specifically, in the case in which the second condition II is satisfied (the movement the operator is relatively large and the frequency of the movement is high) and "workpiece position adjustment" has not been input to variable C(0), or alternatively, when "workpiece loading/unloading" has been input to variable C(0) in step S34, in step S38, "workpiece position adjustment " is input to variable C(i), 1 is added to the flag i, and the flow proceeds to step S40. In the case of No in step S36, and specifically, in the case in which the second condition II is not satisfied (the operation by the operator is relatively insignificant or the frequency of significant operations is low) or when "workpiece position adjustment" has already been input to the variable C(0) in step S38, the flow proceeds to step S40.

In step S40, it is determined whether or not the flag i is 2 or more. In the case of No in step S40, and specifically, if i = 0 or 1, the flow returns to step S32. In the case of Yes in step S40, and specifically, if i = 2 (i is not 3 or more in this flowchart), the flow proceeds to step S42.

When proceeding to step S42, since i = 2, "workpiece loading/unloading" or "workpiece position adjustment" is input to variable C(0) in step S34 or step S38, and "workpiece position adjustment" or "workpiece loading/unloading" is input to variable C(1) in step S38 or step S34.

When "workpiece loading/unloading" is input to variable C(0) and "workpiece position adjustment" is input to variable C(1) in step S42 (Yes in step S42), since the detection results by the first and second distance sensors 108, 110 or distance sensor 208 are considered to reflect that the position of the workpiece has been adjusted after introduction of the workpiece, the setup time is determined as workpiece introduction time (step S44), and the flow proceeds to step S46. Conversely, even in the case of No in step S42, the flow proceeds to step S46.

In the case of No in step S42, "workpiece position adjustment" is input to variable C(0) and "workpiece loading/unloading" is input to variable C(1) (Yes in step S46), and since the detection results by the first and second distance sensors 108, 110 or distance sensor 208 are considered to reflect that the workpiece has been discharged after position adjustment of the workpieces, the setup time is determined as a workpiece position adjustment time (step S48), 0 (zero) is input to variables C(0) and C(1) in step S50, and the subroutine ends. In the case of No in step S46, and specifically, in the case of Yes in step S42, the flow proceeds to step S50, 0 (zero) is input to variables C(0) and C(1), and the subroutine ends.

By executing the subroutine of FIG. 9, the setup time C can be divided in more detail, for example, into a workpiece introduction time, a workpiece discharge time, and a workpiece position adjustment time.

### REFERENCE SIGNS LIST

- 10: process management device
- 12: input unit
- 14: determination unit
- 18: storage unit
- 20: output unit
- 30: distance sensor
- 40: controller
- 50: display
- 100: machine tool
- 102: cover
- 104: first door
- 104a: door handle
- 106: second door
- 106a: door handle
- 108: first distance sensor
- 110: second distance sensor
- 112: first aperture
- 114: second aperture

## Claims

1. A machine tool for machining a workpiece based on a machining program, the machine tool comprising:
a sensor which is arranged in a vicinity of an aperture for introduction of a workpiece and which measures a target movement near the aperture,
a storage unit in which there are stored rules for dividing a non-machining time into a setup time and a non-setup time based on the target movement measured by the sensor,
a determination unit which determines, when the machining program is not being executed, whether a current state of the machine tool is a setup time or a non-setup time based on the target movement and the rules stored in the storage unit, and
an output unit which outputs whether the current state of the machine tool is a setup time or a non-setup time.

2. The machine tool according to claim 1, comprising an output unit which outputs whether the current state of the machine tool is a setup time or a non-setup time to a process management device.

3. The machine tool according to claim 1, comprising a display which displays the setup time along a time axis based on a state of the machine tool determined by the determination unit.

4. The machine tool according to claim 1, wherein the machine tool has a cover which encloses a machining space of a processing machine, and the aperture is a first aperture formed in a side wall of the cover in a position where an operator of the machine tool can access the machining space.

5. The machine tool according to claim 4, wherein the machine tool comprises a tool magazine in which there are stored a plurality of tools used in machining, and a second aperture is formed in a side wall of the cover in a position where the operator of the machine tool can access the tool magazine.

6. The machine tool according to claim 5, wherein the first and second apertures are formed in the same side wall of the cover, and the sensor measures a distance to an object in front of the first aperture or the second aperture along the side wall.

7. The machine tool according to claim 5, wherein the first and second apertures are formed in different side walls of the cover, and the sensor comprises a first sensor which measures a distance to an object in front of the first aperture along the side wall in which the first aperture is formed and a second sensor which measure a distance to an object in front of the second aperture along the side wall in which the second aperture is formed.

8. A production system for producing a product with a plurality of machine tools which machine a workpiece based on a machining program, the production system comprising:
a plurality of machine tools in which a sensor is arranged in a vicinity of an aperture for introduction of a workpiece and measures a target movement near the aperture,
a process management device for managing processes of each of the machine tools, the process management device comprising a storage unit in which there are stored rules for dividing a non-machining time into a setup time and a non-setup time based on the target movement measured by the sensor, a determination unit which determines, when the machining program is not being executed, whether a state of the machine tool is a setup time or a non-setup time based on the target movement and the rules stored in the storage unit, and an output unit which outputs whether the state of the machine tool is a setup time or a non-setup time, and
a display which displays the setup time along a time axis based on the state of the machine tool transmitted from the transmission unit.
